(19) Europäisches Patentamt
European Patent Office
Office européen des brevets

(11) **EP 3 545 470 B1**

(12) **EUROPEAN PATENT SPECIFICATION**

(45) Date of publication and mention
of the grant of the patent:
**19.02.2025 Bulletin 2025/08**

(21) Application number: **17788318.8**

(22) Date of filing: **26.09.2017**

(51) International Patent Classification (IPC):
**G06N 3/0455** (2023.01)   **G06N 3/091** (2023.01)
**G06V 10/776** (2022.01)   **G06N 3/0464** (2023.01)

(52) Cooperative Patent Classification (CPC):
**G06N 3/0455; G06N 3/091; G06V 10/776;**
**G06N 3/0464**

(86) International application number:
**PCT/JP2017/035762**

(87) International publication number:
**WO 2018/096789 (31.05.2018 Gazette 2018/22)**

(54) **METHOD FOR TRAINING NEURON NETWORK AND ACTIVE LEARNING SYSTEM**

VERFAHREN ZUM TRAINIEREN EINES NEURONALEN NETZWERKS UND AKTIVES
LERNSYSTEM

PROCÉDÉ DE FORMATION DE RÉSEAU NEURONAL ET SYSTÈME D'APPRENTISSAGE ACTIF

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.11.2016 US 201615358420**

(43) Date of publication of application:
**02.10.2019 Bulletin 2019/40**

(73) Proprietor: **Mitsubishi Electric Corporation**
**Chiyoda-ku**
**Tokyo 100-8310 (JP)**

(72) Inventors:
• **LIU, Ming-Yu**
**Cambridge**
**Massachusetts 02139 (US)**
• **KAO, Chieh-Chi**
**Cambridge**
**Massachusetts 02139 (US)**

(74) Representative: **Pfenning, Meinig & Partner mbB**
**Patent- und Rechtsanwälte**
**Theresienhöhe 11a**
**80339 München (DE)**

(56) References cited:
**US-A1- 2012 310 864   US-A1- 2012 310 864**

• **LI JIMING: "Active learning for hyperspectral image classification with a stacked autoencoders based neural network", 2015 7TH WORKSHOP ON HYPERSPECTRAL IMAGE AND SIGNAL PROCESSING: EVOLUTION IN REMOTE SENSING (WHISPERS), IEEE, 2 June 2015 (2015-06-02), pages 1 - 4, XP033232050, DOI: 10.1109/WHISPERS.2015.8075429**
• **BENCY ARCHITH JOHN ET AL: "Weakly Supervised Localization Using Deep Feature Maps", 17 September 2016, NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 714 - 731, ISBN: 978-3-642-01969-2, ISSN: 0302-9743, XP047355282**
• **BURR SETTLES: "Active Learning Literature Survey", 26 January 2010 (2010-01-26), XP055219798, Retrieved from the Internet <URL:http://burrsettles.com/pub/settles. activelearning.pdf> [retrieved on 20180112]**
• **XU JIN ET AL: "Active Dictionary Learning in Sparse Representation Based Classification", 27 September 2014 (2014-09-27), XP055799329, Retrieved from the Internet <URL:https://arxiv. org/pdf/1409.5763.pdf> [retrieved on 20210428]**

- **LI JIMING: "Active learning for hyperspectral image classification with a stacked autoencoders based neural network", 2015 7TH WORKSHOP ON HYPERSPECTRAL IMAGE AND SIGNAL PROCESSING: EVOLUTION IN REMOTE SENSING (WHISPERS), IEEE, 2 June 2015 (2015-06-02), pages 1 - 4, XP033232050, DOI: 10.1109/WHISPERS.2015.8075429**
- **BENCY ARCHITH JOHN ET AL: "Weakly Supervised Localization Using Deep Feature Maps", 17 September 2016, NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 714 - 731, ISBN: 978-3-642-01969-2, ISSN: 0302-9743, XP047355282**
- **BURR SETTLES: "Active Learning Literature Survey", 26 January 2010 (2010-01-26), XP055219798, Retrieved from the Internet <URL:http://burrsettles.com/pub/settles.activelearning.pdf> [retrieved on 20180112]**

**Description**

[Technical Field]

This invention relates generally to a method for training a neural network, and more specifically to an active learning method for training artificial neural networks.

[Background Art]

Artificial neural networks (NNs) are revolutionizing the field of computer vision. The top-ranking algorithms in various visual object recognition challenges, including ImageNet, Microsoft COCO, and Pascal VOC, are all based on NNs. The article "Active learning for hyperspectral image classification with a stacked auto-encoders based neural network" by Jiming Li, published on the 7th workshop on hyperspectral image and signal processing: evolution in remote sensing, in Whispers by IEEE, on June 2, 2015, as closest state of the art. Therein, the proposed active learning procedure is based on the uncertainty sampling strategy and a deep neural network. Stacked auto-encoders trained on redundant special and spectral features and a few label training samples are used to initialize a deep neural network. Uncertainty for a given sample is measured by the difference between the largest two class outputs of the neural network. A batch of samples with most uncertainty will be selected after label query and added into the training set. Then, the neural network is retrained. This active batch selection is iterated until the budget, that is, the upper limit of label queries, is reached. Therein, the selection of training samples to be added to the training set is based only on the uncertainty, which is measured by the difference between the largest two class outputs of the neural network. So, the uncertainty criterion is based on the top layer outputs of the neural network, a measure similar to the margin motivation behind multiclass/level uncertainty as performed by current support vector machines.
In the Article "active dictionary learning in spars representation based classification" by Xu Jin et al., from September 27, 2014, an active dictionary learning method is introduced in order to arrive at a proper dictionary for sparse representation. Therein, classification error and reconstruction error are considered as the active learning criteria in selection of the atoms for dictionary construction. In the proposed method, the reconstruction error and the sparse representation based classification error are used to select the most informative data in the training data.

[Summary of Invention]

[Technical Problem]

In the visual object recognition using the NNs, the large scale image datasets are used for training the NNs to obtain good performance. However, annotating large-scale image datasets is an expensive and tedious task, requiring people to spend a large number of hours analyzing image content in a dataset because the subset of important images in the unlabeled dataset are selected and labeled by the human annotations.
Accordingly, there is need to achieve better performance with less annotation processes and, hence, less annotation budgets.

[Solution to Problem]

Some embodiments of the invention are based on recognition that an active learning using an uncertainty measure of features of input signals and reconstruction of the signals from the features provides less annotation processes with improving the accuracy of classifications of signals.
The invention is set out in the appended set of claims.
Accordingly, one embodiment discloses a computer-implemented method for training a neural network according to claim 1.
Another embodiment discloses an active learning system for training a neural network according to claim 4.
Accordingly, one embodiment discloses a non-transitory computer-readable medium storing software comprising instructions executable by one or more computers which, upon such execution, cause the one or more computers to perform operations for training a neural network according to claim 7.
In some embodiments, the use of an artificial neural network that determines an uncertainty measure may reduce central processing unit (CPU) usage, power consumption, and/or network bandwidth usage, which is advantageous for improving the functioning of a computer.

[Brief Description of the Drawings]

[Fig. 1A]

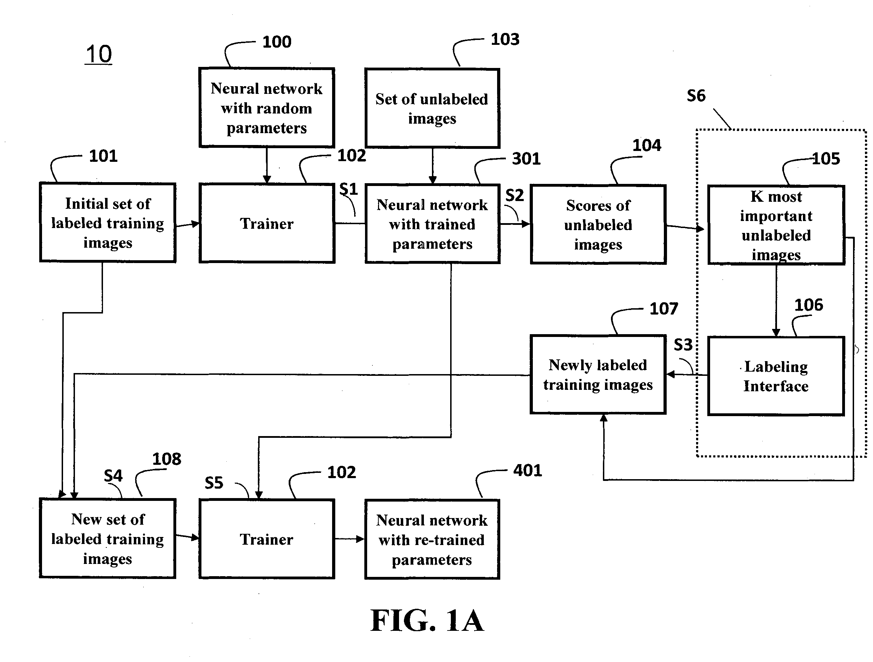

FIG. 1A is a block diagram of the data flow of an active learning system for training a neural network in accordance with some embodiments of the invention.
[Fig. 1B]

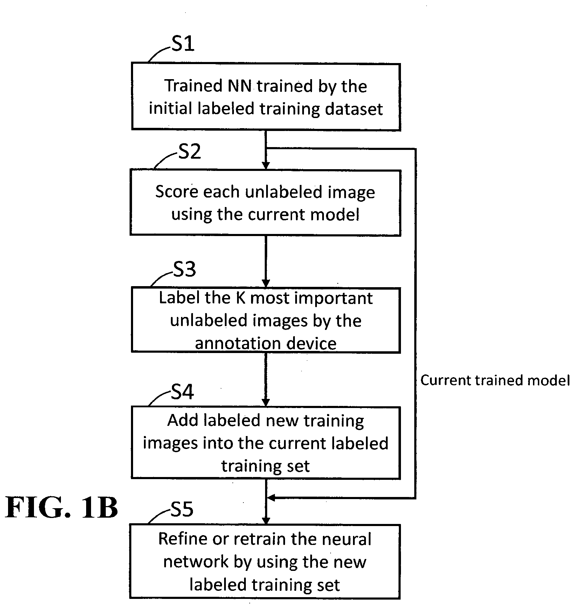

FIG. 1B is a flowchart of an active learning system for training a neural network.
[Fig. 1C]

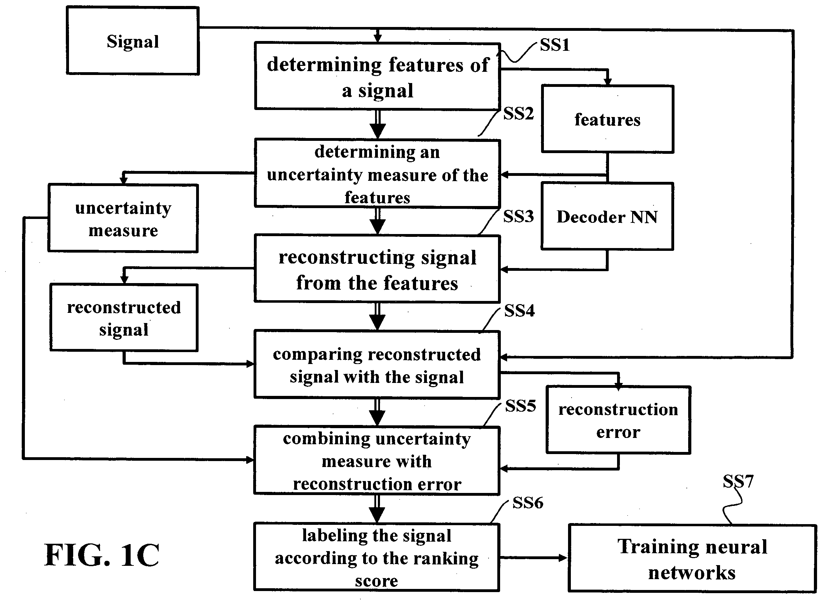

FIG. 1C is a block diagram of process steps to be performed based on some embodiments of the invention.
[Fig. 1D]

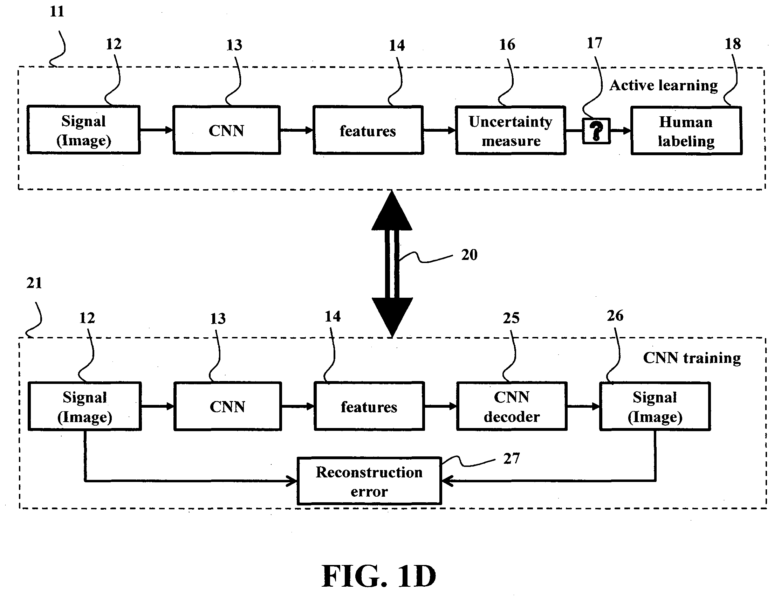

FIG. 1D shows a block diagram indicating an active learning process and a convolutional neural network (CNN) training process in accordance with some embodiments of the invention.
[Fig. 1E]

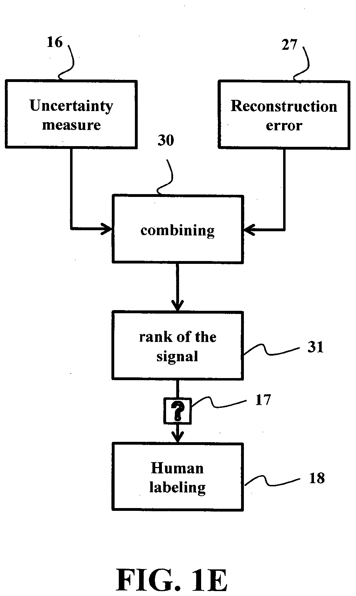

FIG. 1E is a block diagram indicating key process steps performed in an active learning system in accordance with some embodiments of the invention.
[Fig. 2]

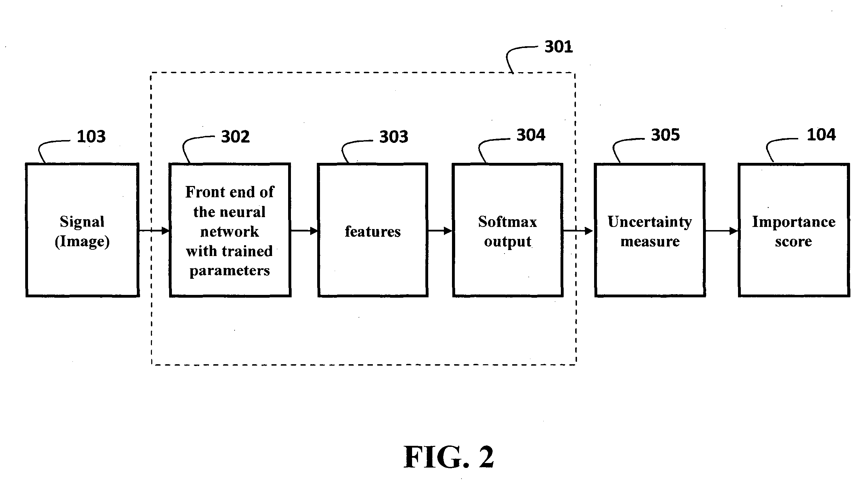

FIG. 2 is a block diagram of an active method for ranking the importance of unlabeled images.
[Fig. 3]

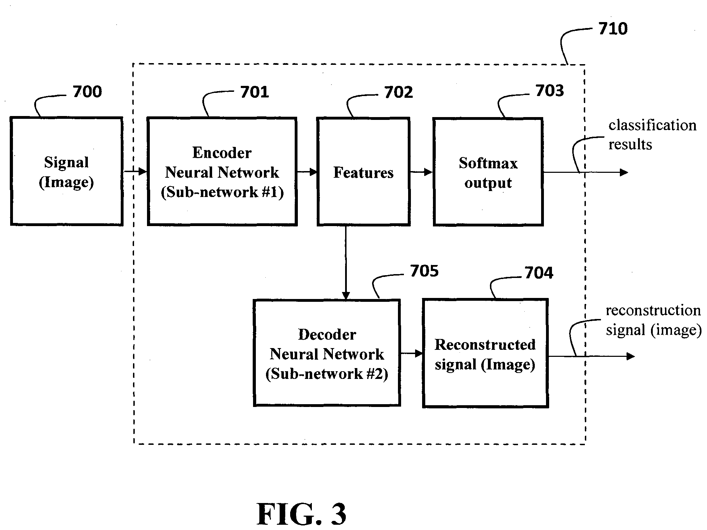

FIG. 3 is a block diagram of a neural network to calculate the uncertainty of input signal according to some embodiments of the invention.
[Fig. 4]

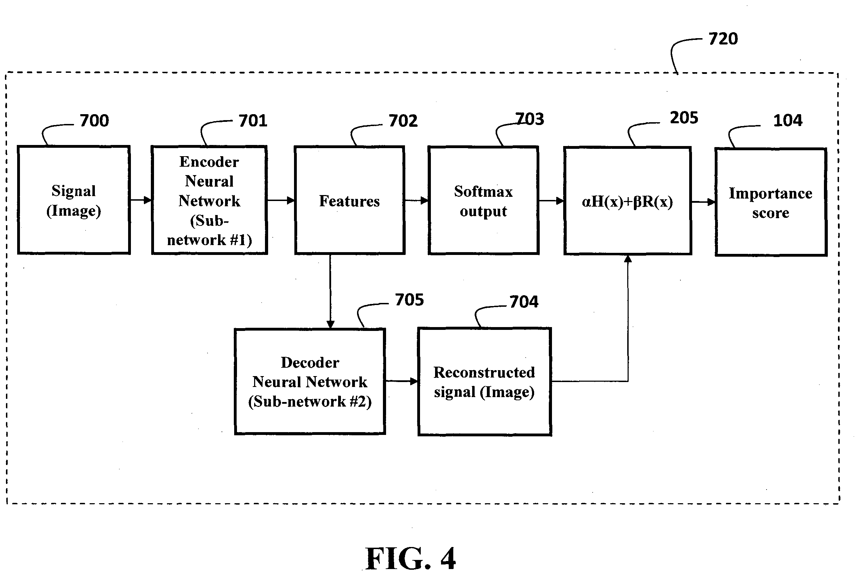

FIG. 4 is a block diagram of a method for ranking the importance of unlabeled images in an active learning system according to some embodiments of the invention.
[Fig. 5]

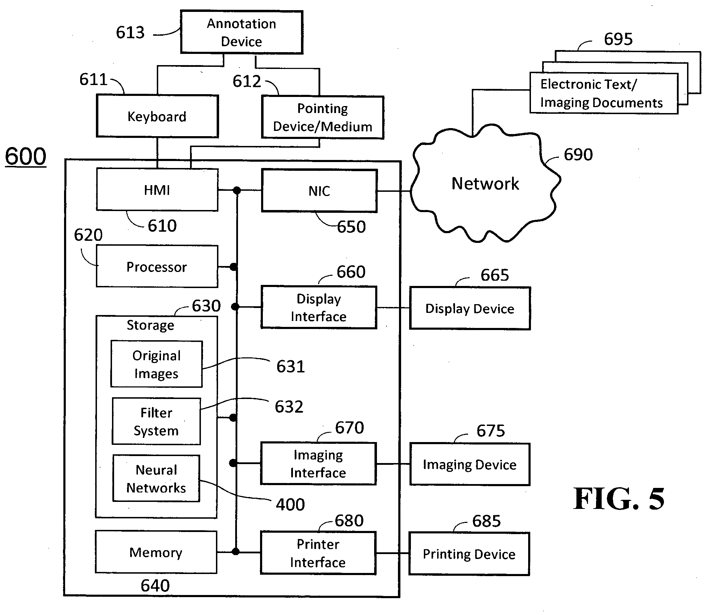

FIG. 5 is a block diagram of an active learning system for annotating the unlabeled images in accordance with some embodiments of the invention.
[Fig. 6]

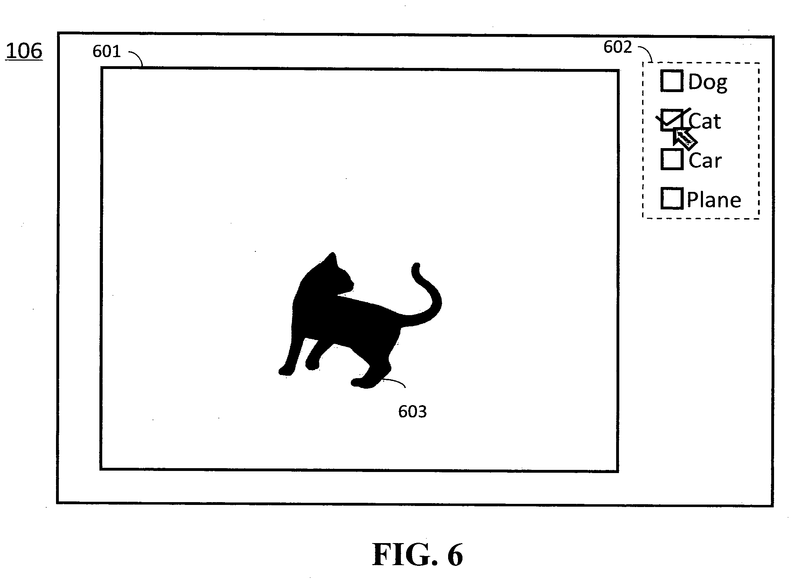

FIG. 6 is an illustration for the labeling interface.
[Fig. 7]

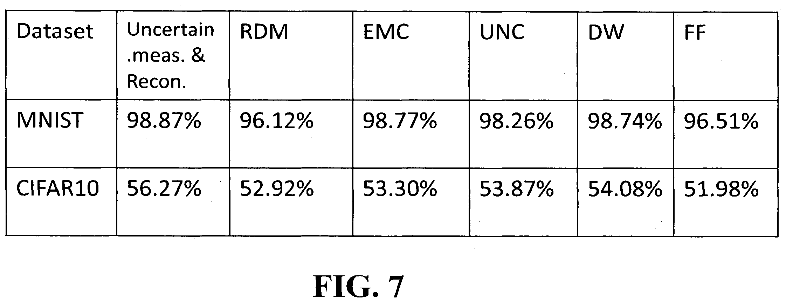

FIG. 7 shows an example of an accuracy comparison of active learning methods on CNN.

[Description of Embodiments]

Although in this specification, reference is sometimes made to "images", the described embodiments can only relate to the invention when the images are electroencephalogram (EEG) signals or electrocardiogram (ECG) signals as required by the appended independent claims.

An active learning system includes a human machine interface, a storage device including neural networks, a memory, a network interface controller connectable with a network being outside the system. The active learning system further includes an imaging interface connectable with an imaging device, a processor configured to connect to the human machine interface, the storage device, the memory, the network interface controller and the imaging interface, wherein the processor executes instructions for classifying an electroencephalogram (EEG) signal or an electrocardiogram (ECG) signal. using the neural networks stored in the storage device, in which the neural networks perform steps of determining features of a signal using the neural network, determining an uncertainty measure of the features for classifying the signal, reconstructing the signal from the features using a decoder neural network to produce a reconstructed signal, comparing the reconstructed signal with the signal to produce a reconstruction error, combining the uncertainty measure with the reconstruction error to produce a rank of the signal for a necessity of a manual labeling, labeling the signal according to the rank to produce the labeled signal, and training the neural network and the decoder neural network using the labeled signal.

FIG. 1A shows an active learning system 10 in accordance with some embodiments of the invention. An initial setting of the active learning system 10 includes a neural network 100 initialized with random parameters, an initial set of labeled training images 101, a trainer 102, a set of unlabeled images 103. In this case, the neural network 100 is a user defined neural network.

The active learning system 10 attempts to efficiently query the unlabeled images for performing annotations through the basic workflow shown in FIG. 1A. Based on the neural network (NN) 100 with randomly initialized parameters, the trainer 102 updates network parameters by fitting the NN 100 to the initial labeled training dataset of images 101. As a result, a trained NN 301 with the updated network parameters is used to rank the importance of images in an unlabeled dataset 103. The unlabeled images 103 are sorted according to importance scores 104 obtained from a ranking result performed by the trained NN 301. The K most important images 105 are stored into a labeling storage in a memory (not shown in the figure) associated to a labeling interface 106. In response to data inputs made by an operator (or annotator), the labeling interface 106 generates annotated images 107 having the ground truth labels. These annotated images 107 are then added to the initial labeled training dataset 101 to form a new training dataset 108. The trainer 102 then retrains the network 301 by fitting the new training dataset of images 108 and obtains updated neural network parameters 401. This procedure is iterative. The updated neural network parameters 401 are used to rank the importance of the rest of the unlabeled images 103, and the K most important images 105 are sent to the labeling interface 106. Usually, this procedure is repeated several times until a predetermined preferred performance is achieved or the budget for annotations is empty.

Further, a method for training a neural network uses a processor in communication with a memory, and the method includes steps of determining features of a signal using the neural network, determining an uncertainty measure of the features for classifying the signal, reconstructing the signal from the features using a decoder neural network to produce a reconstructed signal, comparing the reconstructed signal with the signal to produce a reconstruction error, combining the uncertainty measure with the reconstruction error to produce a rank of the signal for a necessity of a manual labeling, labeling the signal to produce the labeled signal, and training the neural network and the decoder neural network using the labeled signal. The labeling includes labeling the signal using the neural network if the rank does not indicate the necessity of the manual labeling process, and further the labeling includes transmitting a labeling request to an annotation device if the rank indicates the necessity of the manual labeling process.

Further, the determining features may be performed by using an encoder neural network. In this case, the encoder neural network can perform feature analysis of given signals. The signal is an electroencephalogram (EEG) signal or and electrocardiogram (ECG) signal. Accordingly, some embodiments of the invention can be applied to provide specific signals for assisting a diagnosis of medical doctors.

FIG. 1B is a flowchart of an active learning system for training neural network.

The active learning system 10 attempts to efficiently query the unlabeled images for the annotation through a process flow shown in the figure. The process flow includes the following stages:

S1 - An initial labeled training dataset is provided and the neural network is trained by using the dataset.
S2 - By using the trained NN obtained in step S1, each image in the unlabeled dataset is evaluated and a score would be assigned to each image.
S3 - Given the score obtained in step S2, images with the top K highest scores are selected for labeling by the annotation device.
S4 - The selected images with newly annotated labels are added into the current (latest) labeled training set to get a new training dataset.
S5 - The network is refined or retrained based on the new training dataset.

As shown in FIG. 1B, the active learning algorithms of the active learning system 10 attempt to efficiently query images for labeling images. An initialization model is trained on an initial for small labeled training set. Based on the current model, which is the latest trained model, the active learning system 10 tries to find the most informative unlabeled images to be annotated. A subset of the informative images are labeled and added to the training set for the next round of training. This training process is iteratively performed, and the active learning system 10 carefully adds more labeled images for gradually increasing the accuracy performance of the model on the test dataset. By the very nature, the algorithms of the active learning system 10 usually work much better than the standard approach for training, because the standard approach simply selects the samples at random for labeling.

Although a term "image" is used in the specification, another "signal" is used in the active learning system 10: The active learning system processes an electroencephalogram (EEG) signal or an electrocardiogram (ECG) signal. Instead of the images, the EEG or ECG signals are used to train the neural network and decoder neural network in the active learning system 10.

Then the trained active learning system 10 is applied to determine or judge abnormality with respect to an input signal, which can be a useful assistance for medical diagnosis of relevant symptoms.

FIG. 1C shows a block diagram of process steps to be performed based on some embodiments of the invention. An input signal is fed into the active learning system 10, an encoder neural network of the active learning system 10 determines features of the input signal in step SS1 and stores the features into a working memory (not shown). Further, an uncertainty measure is determined by a trained neural network 301 of the active learning system 10 in step SS2 and a result of the uncertainty measure is stored in the working memory. The features determined in SS1 is reconstructed by a decoder NN in step SS3 and a reconstructed signal is stored in the working memory. In step SS4, the reconstructed signal is fed from the working memory and compared with the input signal to compute a reconstruction error. The reconstruction error is stored in the working memory and fed to step SS5. In step SS5, the uncertain measure is read from the working memory and combined with the reconstruction error. In step SS6, the input signal is labeled according to a ranking score and the labeled signal is used in step SS7 for training the neural networks in the active learning system 10.

FIG. 1D shows a block diagram indicating an active learning process 11 and a convolutional neural network (CNN) training process 21, both of which are performed in the active learning system 10. Upon an identical input signal 12 (or input images 12), the active learning process 11 feeds the input signal 12 to a convolutional neural network (CNN) 13 and the CNN 13 extracts features 14 from the input signal 12. Further, the active learning process 11 computes an uncertainty measure 16 from the features 14 and provides a score 17 based on the uncertainty measure 16.

In the CNN training process 21, the input signal 12 is fed to the CNN 13 and the CNN 13 extracts the features 14 from the input signal 12. Then a CNN decoder 25 reconstructs a signal 26 from the features 14 to compare with the input signal 12. By comparing the input signal 12 and the reconstructed signal 26, the CNN training process 21 computes or generates a reconstruction error 27. The active learning system 10 combines the reconstruction error 27 and the uncertainty measure 16, and ranks the input signal 12 by a score 17.

When the score 17 is higher than a predetermined threshold, the input signal 12 is fed to a labeling interface (not shown) that allows an operator to annotate the input signal 12 according to one of predetermined classified labels, which is indicated as Human labeling process 18. The process steps performed in the active learning process 11 and the CNN training process 21 described above are illustrated in FIG. 1E, which shows key process steps performed in the active learning system 10.

The rank is defined based on an addition of an entropy function and the reconstruction error.

FIG. 2 shows a block diagram of process steps for ranking the importance of unlabeled images in an active learning system according to some embodiments of the invention. When an input image 103 is provided to a front end of the NN 301 in step 302, the trained NN 301 generates features 303 and outputs a classification result via a softmax output layer 304. The classification result is used for calculating the importance score 104 of the input signal through uncertainty measure 305 based on the Rényi entropy.

The trained NN 301 is used for extracting the features 303 for each of the images in the unlabeled dataset 103 and also for computing classifications by the softmax output layer 304. The classification result obtained by the softmax output layer 304 is a probability vector of dimension D where the dimension D is the number of object classes. Denoting the input image by *x* and the classification result computed by the softmax output layer 304 indicating a probability vector by *p*, each dimension of the probability vector *p* represents the probability that the input image 103 belongs to a specific class. The sum of the components of *p* is equal to one. The uncertainty of the class of the input image can then be measured in the step of the uncertain measure 305 by an entropy function *H(x)*. When the entropy *H(x)* is computed based on the Shannon entropy, the uncertainty of the class of the input image is given by

$$H(x) = \sum_{i=1}^{D} -p_i log p_i \qquad (1)$$

In an uncertainty method, the uncertainty measure can be used as the importance score of the unlabeled image 104. Further, other entropy measures defined in the Renyi entropy category can be used for the uncertainty computation. For instance, the entropy function H(x) may be Collision entropy,

$$H(x) = -log \sum_{i=1}^{D} p_i{}^2 \text{ or Min-entropy, } H(x) = -log \max_i pi.$$

Further, entropy based methods may be defined by $H(x) = 1 - log \max_i pi$ for obtaining an estimate of uncertainty, and an experimental result is shown in FIG. 7.

Since the uncertainty method is a universal active learning method, it can be used in conjunction with various classifiers (SVMs, Gaussian processes, or neural networks) as long as the vector representing the class probability can be derived from each input image. In this case, the uncertainty method does not utilize the property of the classifier and reaches sub-optimal performance.

In accordance with some embodiments, an approach to improve the uncertainty method by utilizing the property of neural network computation is described in the following. It is established that a neural network computes a hierarchy of feature representation as processing an input image. The completeness of the feature representation can be used to judge how well the neural network models the input image. In order to quantify the completeness of the feature representation, an autoencoder neural network can be used.

FIG. 3 shows a block diagram of an autoencoder neural network 710 according to some embodiments of the invention. The autoencoder neural network 710 includes an encoder neural network 701, a decoder neural network 705, and a softmax output layer 703.

When an input image 700 is provided, the autoencoder NN 710 outputs classification results 703 from the features 702 extracted by the encoder neural network 701. Further, the features 702 are transmitted to the decoder neural network 705. The decoder neural network 705 generates a reconstructed image 704 from the features 702 extracted by the encoder NN 701. In some cases, the encoder NN 701 may be referred to as a first sub-network #1, and the decoder neural network 705 may be referred to as a second sub-network #2. The first sub-network 701 extracts the features 702 from the input image 700. The extracted features 702 are fed into the softmax output layer 703 that outputs classification results. In this case, the extracted features 702 are also fed into the second sub-network #2. The second sub-network #2 generates a reconstructed image 704 from the features 702 and outputs the reconstruction image.

In some embodiments, a reconstruction error is defined based on the Euclidean distance between an input image (or input signal) and a reconstructed image (or reconstructed signal).

Further, the reconstructed image 704 is compared to the input image 700 based on the Euclidean distance measurement. The Euclidean distance between the input image 700 and the reconstructed image 704 can be used for quantifying the completeness of the feature representation. When letting *x* be the vector representation of the input image and *y* be the vector representation of the reconstructed image, the reconstruction error measure $R(x)$ is defined by the Euclidean distance as follows.

$$R(x) = \lor\, x - y\, \lor_2^2 \tag{2}$$

The Euclidean distance indicates how the input image is well represented by the feature representation. When a reconstruction error $R(x)$ is small, it indicates that the neural network models the input image well. However, when the reconstruction error $R(x)$ is large, then it indicates that the neural network does not model the input image well. In some embodiments, including the input image in training improves the representation power (accuracy) of the autoencoder NN 710.

For ranking the importance of an input image, the following formula can be used,

$$\alpha H(x) + \beta R(x) \tag{3}$$

where $\alpha$ and $\beta$ are non-negative weighting parameters.

FIG. 4 shows a block diagram indicating an integrated design of sub-networks #1 and #2 used in the uncertainty measure based an active learning system 720 according to some embodiments of the invention. The block diagram shows data process steps used in a method for ranking the importance of unlabeled images in the active learning system 720. The active learning system 720 includes an encoder neural network 701 (first sub-network #1), a softmax output layer 703, a ranking layer 205, a decoder neural network (second sub-network #2).

When the input image 700 is provided to the active learning system 720, the encoder NN 701 generates the features 702 from the input image 700. The features 702 can be used for generating a classification result via the Softmax output layer 703. The classification result is fed to the ranking layer 205. Further, the features 720 is fed to the decoder NN 705 and used to generate a reconstructed image 704 by using the decoder NN 705. The reconstructed image 704 is fed to the ranking layer 205. At the ranking layer 205, the classification result and the reconstructed image are used to compute the importance score 104 with respect to an unlabeled image of the input image 700.

The importance score 104 of the unlabeled image can be calculated from the classification output 703 and the reconstructed image 704 by using the ranking layer 205 in the calculation step. After obtaining the importance score 104 regarding the unlabeled image, the active learning system outputs the importance score 104 as an output.

FIG. 5 shows a block diagram of an active learning system 600 according to some embodiments of the invention. The active learning system 600 includes a human machine interface (HMI) 610 connectable with a keyboard 611 and a pointing device/medium 612, a processor 620, a storage device 630, a memory 640, a network interface controller 650 (NIC) connectable with a network 690 including local area networks and internet network, a display interface 660, an imaging interface 670 connectable with an imaging device 675, a printer interface 680 connectable with a printing device 685. The processor 620 may include one or more than one central processing unit (CPU). The active learning system 600 can receive electric text/imaging documents 695 via the network 690 connected to the NIC 650. The active learning system 600 can receive annotation data from the annotation device 613 via the HMI 610. Further, the annotation device 613 includes a display screen, and the display screen of the annotation device 613 is configured to display the labeling interface 106 that allows the operator to perform labeling process of unlabeled images stored in the memory 640 by showing the unlabeled image in the display region 601 with the selection area 602 having predetermined annotation boxes and predetermined labeling candidates to be selected.

The storage device 630 includes original images 631, a filter system module 632, and a neural network 400. The processor 620 loads the code of the neural network 400 in the storage 630 to the memory 640 and executes the instructions of the code for implementing the active learning. Further, the pointing device/medium 612 may include modules that read programs stored on a computer readable recording medium.

FIG. 6 shows an example of the labeling interface 106 according to some embodiments of the invention. The labeling interface 106 includes a display region 601 and a selection area 602. The labeling interface 106 can be installed in the annotation device 613, which indicates the labeling interface 106 on a display of the annotation device 613. In some cases, the labeling interface 106 can be installed an input/output interface (not shown in the figure) connectable to the human machine interface (HMI) 610 via the network 690. When the labeling interface 106 receives an unlabeled image of the K most important unlabeled images 105 in step S6 of FIG. 1A, the labeling interface 106 shows the unlabeled image on the display region 601. The selection area 602 indicates predetermined candidates for labeling the unlabeled image shown on the display region 601. The labeling interface 106 allows an operator to assign one of selectable annotations indicated in the selection area 602 with respect to the unlabeled image shown in the display region 601. In FIG. 6, the selection area 602 provides selection boxes with predetermined labeling candidates: Dog, Cat, Car, and Plane. As an example, FIG. 6 shows an unlabeled image indicating a cat image 603 displayed in the display region 601. In this case, the annotation box of Cat is checked by the operator (annotator) in response to the cat image shown in the selection area 602. The labeling interface 106 is configured to load and show unlabeled images stored the labeling storage in the memory according to the operations by the operator. The images labeled by the labeling interface 106 are stored into a new training image storage area in the memory in step S3 as newly labeled training images 107 as seen in FIG. 1A.

FIG. 7 shows experimental results of image classifications using the active learning methods on a convolutional neural network (CNN) for comparison, and the uncertainty method based on a CANN.

For comparison, the following convolutional neural network (CNN) was used for the experiments in the MNIST dataset: (20)5c-2p-(50)5c-2p-500fc-r-10fc, where "(20)5c" denotes a convolutional layer of 20 neurons with a kernel size 5, "2p" denotes a $2\times2$ pooling, "r" denotes rectified-linear units (ReLU), and "500fc" denotes a fully connected layer with 500 nodes. One softmax loss layer is added to the classification output "10fc" for the backpropagation. For the convolutional autoencoder neural network (CANN) part, the structure from the deconvolutional network is adapted. For the CIFAR10 dataset: "(32)3c-2p-r-(32)3c-r-2p-(64)3c-r-2p-200fc-10fc". For the CANN part, the structure is the same as mentioned in MNIST settings.

In FIG. 7, the dataset "Uncertain. meas. & Recon." indicates data obtained by the uncertainty measure and reconstruction method according to an embodiment of the invention. The methods other than the uncertainty method shown in FIG. 7 are obtained by using a CNN instead of the structure with an autoencoder. Further, "RDM" indicates random method, "EMC" indicates an expected model change method, "UNC" indicates an uncertainty method without reconstruction, "DW" indicates a density weighted method, and "FF" indicates a farthest first method. In both MNIST setting and CIFAR10 setting, the uncertainty measure & reconstruction method in accordance with the embodiment of the invention shows superior performance compared to the other methods. This indicates one of advantages of the active learning system in accordance with some embodiments of the invention.

The advantage is reducing the number of annotated data, as discussed above, the artificial neural network according to some embodiments of the invention can provide less annotation processes with improving the classification accuracy, the use of artificial neural network that determines an uncertainty measure may reduce central processing unit (CPU) usage, power consumption, and/or network bandwidth usage, which is advantageous for improving the functioning of a computer.

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format. The processor can be connected to memory, transceiver, and input/output interfaces as known in the art.

Also, the various methods or processes outlined herein may be coded as software that is executable on one or more processors that employ any one of a variety of operating systems or platforms. Alternatively, or additionally, the invention may be embodied as a computer readable medium other than a computer-readable storage medium, such as signals.

The terms "program" or "software" are used herein in a generic sense to refer to any type of computer code or set of computer-executable instructions that can be employed to program a computer or other processor to implement various aspects of the present invention as discussed above.

Use of ordinal terms such as "first," "second," in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Although several preferred embodiments have been shown and described, it would be apparent to those skilled in the art that many changes and modifications may be made thereunto without the departing from the scope of the invention, which is defined by the following claims.

**Claims**

1. A computer-implemented method for training a neural network (400) to determine abnormality in a signal, the signal being an electrocardiogram, ECG, signal or an electroencephalogram, EEG, signal using a processor in communication with a memory, comprising:

   determining (SS1) features (14) of the signal (12) using the neural network (400);
   determining (SS2) an entropy function as an uncertainty measure (16) of the features (14) for classifying the signal (12);
   reconstructing (SS3) the signal (12) from the features (14) using a decoder neural network (705) to produce a reconstructed signal;
   comparing (SS4) the reconstructed signal with the signal (12) to produce a reconstruction error (27);
   combining (SS5) the uncertainty measure (16) with the reconstruction error (27) to produce a rank of the signal for a necessity of a manual labeling process, wherein the rank is defined based on an addition of the entropy function and the reconstruction error;
   labeling (SS6) the signal using the neural network (400) to produce a labeled signal if the rank does not indicate the necessity of the manual labeling process;
   transmitting a labeling request to an annotation device if the rank indicates the necessity of the manual labeling process; and
   training (SS7) the neural network (400) and the decoder neural network (705) using the labeled signal.

2. The method of claim 1, wherein the step of determining features are performed by using an encoder neural network (701).

3. The method of claim 1, wherein the reconstruction error is defined based on a Euclidean distance between the signal and the reconstructed signal.

4. An active learning system (600) for training a neural network (400) to determine abnormality in a signal, the signal being an electrocardiogram, ECG, signal or an electroencephalogram, EEG, signal, comprising:

   a human machine interface (610);
   a storage device (630) including neural networks;
   a memory (640);
   a network interface controller (650) connectable with a network (690) being outside the system;
   an imaging interface (670) connectable with an imaging device (675); and
   a processor (620) configured to connect to the human machine interface, the storage device, the memory, the network interface controller and the imaging interface,
   wherein the processor executes instructions for classifying a signal using the neural network (400) stored in the storage device, wherein the processor (620) performs steps of:

      determining (SS1) features of the signal using the neural network (400);
      determining (SS2) an entropy function as an uncertainty measure of the features for classifying the signal;
      reconstructing (SS3) the signal from the features using a decoder neural network (705) to produce a reconstructed signal;
      comparing (SS4) the reconstructed signal with the signal to produce a reconstruction error;
      combining (SS5) the uncertainty measure with the reconstruction error to produce a rank of the signal for a necessity of a manual labeling process, wherein the rank is defined based on an addition of the entropy function and the reconstruction error;
      labeling (SS6) the signal using the neural network (400) to produce a labeled signal if the rank does not indicate the necessity of the manual labeling process;
      transmitting a labeling request to an annotation device (613) if the rank indicates the necessity of the manual labeling process; and
      training (SS7) the neural network (400) and the decoder neural network (705) using the labeled signal.

5. The system of claim 4, wherein the determining features are performed by using an encoder neural network (701).

6. The system of claim 4, wherein the reconstruction error is defined based on a Euclidean distance between the signal and the reconstructed signal.

7. A non-transitory computer-readable medium storing software comprising instructions executable by one or more computers which, upon such execution, cause the one or more computers to perform operations for training a neural network (400) to determine abnormality in a signal, the signal being an electrocardiogram, ECG, signal or an electroencephalogram, EEG, signal, comprising:

> determining (SS1) features of the signal using the neural network (400);
> determining (SS2) an entropy function as an uncertainty measure of the features for classifying the signal;
> reconstructing (SS3) the signal from the features using a decoder neural network (705) to produce a reconstructed signal;
> comparing (SS4) the reconstructed signal with the signal to produce a reconstruction error;
> combining (SS5) the uncertainty measure with the reconstruction error to produce a rank of the signal for a necessity of a manual labeling process, wherein the rank is defined based on an addition of the entropy function and the reconstruction error;
> labeling (SS6) the signal using the neural network (400) to produce a labeled signal if the rank does not indicate the necessity of the manual labeling process;
> transmitting a labeling request to an annotation device if the rank indicates the necessity of the manual labeling process; and
> training (SS7) the neural network (400) and the decoder neural network (705) using the labeled signal.

8. The medium of claim 7, wherein the determining features are performed by using an encoder neural network (701).

9. The medium of claim 7, wherein the reconstruction error is defined based on a Euclidean distance between the signal and the reconstructed signal.

## Patentansprüche

1. Computerimplementiertes Verfahren zum Trainieren eines neuronalen Netzes (400), um eine Anomalie in einem Signal zu bestimmen, wobei das Signal ein Elektrokardiogramm-, EKG-, Signal oder ein Elektroenzephalogramm-, EEG-, Signal ist, unter Verwendung eines Prozessors in Kommunikation mit einem Arbeitsspeicher, umfassend:

> Bestimmen (SS1) von Merkmalen (14) des Signals (12) unter Verwendung des neuronalen Netzes (400);
> Bestimmen (SS2) einer Entropiefunktion als Unsicherheitsmaß (16) der Merkmale (14) zur Klassifizierung des Signals (12);
> Rekonstruieren (SS3) des Signals (12) aus den Merkmalen (14) unter Verwendung eines neuronalen Decodierungsnetzes (705) zur Erzeugung eines rekonstruierten Signals;
> Vergleichen (SS4) des rekonstruierten Signals mit dem Signal (12) zur Erzeugung eines Rekonstruktionsfehlers (27);
> Kombinieren (SS5) des Unsicherheitsmaßes (16) mit dem Rekonstruktionsfehler (27) zur Erzeugung eines Rangs des Signals für eine Notwendigkeit eines manuellen Kennzeichnungsprozesses, wobei der Rang auf der Grundlage einer Addition der Entropiefunktion und des Rekonstruktionsfehlers definiert ist;
> Kennzeichnen (SS6) des Signals mit Hilfe des neuronalen Netzes (400) zur Erzeugung eines gekennzeichneten Signals, falls der Rang nicht die Notwendigkeit des manuellen Kennzeichnungsprozesses anzeigt;
> Übermitteln einer Kennzeichnungsanforderung an eine Annotationseinrichtung, falls der Rang die Notwendigkeit des manuellen Kennzeichnungsprozesses anzeigt; und
> Trainieren (SS7) des neuronalen Netzes (400) und des neuronalen Dekodierungsnetzes (705) unter Verwendung des gekennzeichneten Signals.

2. Verfahren nach Anspruch 1, wobei der Schritt des Bestimmens von Merkmalen unter Verwendung eines neuronalen Kodierungsnetzes (701) durchgeführt wird.

3. Verfahren nach Anspruch 1, wobei der Rekonstruktionsfehler auf der Grundlage eines euklidischen Abstands zwischen dem Signal und dem rekonstruierten Signal definiert ist.

4. Aktives Lernsystem (600) zum Trainieren eines neuronalen Netzes (400), um eine Anomalie in einem Signal zu bestimmen, wobei das Signal ein Elektrokardiogramm-, EKG-, Signal oder ein Elektroenzephalogramm-, EEG-, Signal ist, umfassend:

eine Mensch-Maschine-Schnittstelle (610);

eine Speichereinrichtung (630) umfassend neuronale Netze;

einen Arbeitsspeicher (640);

eine Netzschnittstellen-Steuerungseinheit (650), verbindbar mit einem Netz (690) außerhalb des Systems;

eine bildgebende Schnittstelle (670), verbindbar mit einer bildgebenden Einrichtung (675); und

einen Prozessor (620), der eingerichtet ist, mit der Mensch-Maschine-Schnittstelle, der Speichereinrichtung, dem Arbeitsspeicher, der Netzschnittstellen-Steuerungseinheit und der bildgebenden Schnittstelle verbunden zu werden,

wobei der Prozessor Anweisungen zur Klassifizierung eines Signals unter Verwendung des neuronalen Netzes (400), das in der Speichereinrichtung gespeichert ist, ausführt, wobei der Prozessor (620) Schritte ausführt des:

Bestimmens (SS1) von Merkmalen des Signals unter Verwendung des neuronalen Netzes (400);

Bestimmens (SS2) einer Entropiefunktion als ein Unsicherheitsmaß für die Merkmale zur Klassifizierung des Signals;

Rekonstruierens (SS3) des Signals aus den Merkmalen unter Verwendung eines neuronalen Dekodierungsnetzes (705) zur Erzeugung eines rekonstruierten Signals;

Vergleichens (SS4) des rekonstruierten Signals mit dem Signal, um einen Rekonstruktionsfehler zu erzeugen;

Kombinierens (SS5) des Unsicherheitsmaßes mit dem Rekonstruktionsfehler zur Erzeugung eines Rangs des Signals für die Notwendigkeit eines manuellen Kennzeichnungsprozesses, wobei der Rang auf der Grundlage einer Addition der Entropiefunktion und des Rekonstruktionsfehlers definiert ist;

Kennzeichnens (SS6) des Signals mit Hilfe des neuronalen Netzes (400) zur Erzeugung eines gekennzeichneten Signals, falls der Rang nicht die Notwendigkeit des manuellen Kennzeichnungsprozesses anzeigt;

Übermittelns einer Kennzeichnungsanforderung an eine Annotationseinrichtung (613), falls der Rang die Notwendigkeit des manuellen Kennzeichnungsprozesses anzeigt; und

Trainieren (SS7) des neuronalen Netzes (400) und des neuronalen Dekodierungsnetzes (705) unter Verwendung des gekennzeichneten Signals.

5. System nach Anspruch 4, wobei das Bestimmen von Merkmalen unter Verwendung eines neuronalen Kodierungsnetzes (701) durchgeführt wird.

6. System nach Anspruch 4, wobei der Rekonstruktionsfehler auf der Grundlage eines euklidischen Abstands zwischen dem Signal und dem rekonstruierten Signal definiert ist.

7. Nicht-transitorisches computerlesbares Medium, das Software speichert, die Befehle umfasst, die von einem oder mehreren Computern ausgeführt werden können, die bei einer solchen Ausführung den einen oder die mehreren Computer veranlassen, Operationen zum Trainieren eines neuronalen Netzes (400) durchzuführen, um eine Anomalie in einem Signal zu bestimmen, wobei das Signal ein Elektrokardiogramm-, EKG-, Signal oder ein Elektroenzephalogramm-, EEG-, Signal ist, umfassend:

Bestimmen (SS1) von Merkmalen des Signals unter Verwendung des neuronalen Netzes (400);

Bestimmen (SS2) einer Entropiefunktion als ein Unsicherheitsmaß für die Merkmale zur Klassifizierung des Signals;

Rekonstruierens (SS3) des Signals aus den Merkmalen unter Verwendung eines neuronalen Dekodierungsnetzes (705) zur Erzeugung eines rekonstruierten Signals;

Vergleichen (SS4) des rekonstruierten Signals mit dem Signal zum Erzeugen eines Rekonstruktionsfehlers;

Kombinierens (SS5) des Unsicherheitsmaßes mit dem Rekonstruktionsfehler zur Erzeugung eines Rangs des Signals für die Notwendigkeit eines manuellen Kennzeichnungsprozesses, wobei der Rang auf der Grundlage einer Addition der Entropiefunktion und des Rekonstruktionsfehlers definiert ist;

Kennzeichnen (SS6) des Signals mit Hilfe des neuronalen Netzes (400) zur Erzeugung eines gekennzeichneten Signals, falls der Rang nicht die Notwendigkeit des manuellen Kennzeichnungsprozesses anzeigt;

Übermitteln einer Kennzeichnungsanforderung an eine Annotationseinrichtung, falls der Rang die Notwendigkeit des manuellen Kennzeichnungsprozesses anzeigt; und

Trainieren (SS7) des neuronalen Netzes (400) und des neuronalen Dekodierungsnetzes (705) unter Verwendung des gekennzeichneten Signals.

8. Medium nach Anspruch 7, wobei das Bestimmen von Merkmalen unter Verwendung eines neuronalen Kodierungsnetzes (701) durchgeführt wird.

9. Medium nach Anspruch 7, wobei der Rekonstruktionsfehler auf der Grundlage eines euklidischen Abstands zwischen dem Signal und dem rekonstruierten Signal definiert ist.

**Revendications**

1. Procédé mis en œuvre par ordinateur pour entraîner un réseau neuronal (400) afin de déterminer une anomalie dans un signal, le signal étant un signal d'électrocardiogramme, ECG, ou un signal d'électroencéphalogramme, EEG, en utilisant un processeur en communication avec une mémoire, comprenant les étapes consistant à :

   déterminer (SS1) des caractéristiques (14) du signal (12) en utilisant le réseau neuronal (400) ;
   déterminer (SS2) une fonction d'entropie en tant que mesure d'incertitude (16) des caractéristiques (14) pour classer le signal (12) ;
   reconstruire (SS3) le signal (12) à partir des caractéristiques (14) en utilisant un réseau neuronal de décodeur (705) pour produire un signal reconstruit ;
   comparer (SS4) le signal reconstruit avec le signal (12) pour produire une erreur de reconstruction (27) ;
   combiner (SS5) la mesure d'incertitude (16) avec l'erreur de reconstruction (27) pour produire un rang du signal pour une nécessité d'un processus d'étiquetage manuel, dans lequel le rang est défini sur la base d'une addition de la fonction d'entropie et de l'erreur de reconstruction ;
   étiqueter (SS6) le signal en utilisant le réseau neuronal (400) pour produire un signal étiqueté si le rang n'indique pas la nécessité du processus d'étiquetage manuel ;
   transmettre une demande d'étiquetage à un dispositif d'annotation si le rang indique la nécessité du processus d'étiquetage manuel ; et
   former (SS7) le réseau neuronal (400) et le réseau neuronal de décodeur (705) en utilisant le signal étiqueté.

2. Procédé selon la revendication 1, dans lequel l'étape de détermination de caractéristiques est réalisée en utilisant un réseau neuronal de codeur (701).

3. Procédé selon la revendication 1, dans lequel l'erreur de reconstruction est définie sur la base d'une distance euclidienne entre le signal et le signal reconstruit.

4. Système d'apprentissage actif (600) pour entraîner un réseau neuronal (400) à déterminer une anomalie dans un signal, le signal étant un signal d'électrocardiogramme, ECG, ou un signal d'électroencéphalogramme, EEG, comprenant :

   une interface homme-machine (610) ;
   un dispositif de stockage (630) incluant des réseaux neuro-naux ;
   une mémoire (640) ;
   un dispositif de commande d'interface réseau (650) pouvant être connecté à un réseau (690) se trouvant à l'extérieur du système ;
   une interface d'imagerie (670) pouvant être connectée à un dispositif d'imagerie (675) ; et
   un processeur (620) configuré pour se connecter à l'interface homme-machine, au dispositif de stockage, à la mémoire, au dispositif de commande d'interface réseau et à l'interface d'imagerie,
   dans lequel le processeur exécute des instructions pour classer un signal en utilisant le réseau neuronal (400) stocké dans le dispositif de stockage, dans lequel le processeur (620) exécute les étapes consistant à :

      déterminer (SS1) des caractéristiques du signal en utilisant le réseau neuronal (400) ;
      déterminer (SS2) une fonction d'entropie en tant que mesure d'incertitude des caractéristiques pour classer le signal ;
      reconstruire (SS3) le signal à partir des caractéristiques en utilisant un réseau neuronal de décodeur (705) pour produire un signal reconstruit ;
      comparer (SS4) le signal reconstruit avec le signal pour produire une erreur de reconstruction ;
      combiner (SS5) la mesure d'incertitude avec l'erreur de reconstruction pour produire un rang du signal pour une nécessité d'un processus d'étiquetage manuel, dans lequel le rang est défini sur la base d'une addition de la fonction d'entropie et de l'erreur de reconstruction ;
      étiqueter (SS6) le signal en utilisant le réseau neuronal (400) pour produire un signal étiqueté si le rang n'indique pas la nécessité du processus d'étiquetage manuel ;

transmettre une demande d'étiquetage à un dispositif d'annotation (613) si le rang indique la nécessité du processus d'étiquetage manuel ; et

former (SS7) le réseau neuronal (400) et le réseau neuronal de décodeur (705) en utilisant le signal étiqueté.

**5.** Système selon la revendication 4, dans lequel la détermination de caractéristiques est réalisée en utilisant un réseau neuronal de codeur (701).

**6.** Système selon la revendication 4, dans lequel l'erreur de reconstruction est définie sur la base d'une distance euclidienne entre le signal et le signal reconstruit.

**7.** Support non transitoire lisible par ordinateur stockant un logiciel comprenant des instructions exécutables par un ou plusieurs ordinateurs qui, lors de cette exécution, amènent les un ou plusieurs ordinateurs à effectuer des opérations pour entraîner un réseau neuronal (400) à déterminer une anomalie dans un signal, le signal étant un signal d'électrocardiogramme, ECG, ou un signal d'électroencéphalogramme, EEG, comprenant les étapes consistant à :

déterminer (SS1) des caractéristiques du signal en utilisant le réseau neuronal (400) ;

déterminer (SS2) une fonction d'entropie en tant que mesure d'incertitude des caractéristiques pour classer le signal ;

reconstruire (SS3) le signal à partir des caractéristiques en utilisant un réseau neuronal de décodeur (705) pour produire un signal reconstruit ;

comparer (SS4) le signal reconstruit avec le signal pour produire une erreur de reconstruction ;

combiner (SS5) la mesure d'incertitude avec l'erreur de reconstruction pour produire un rang du signal pour une nécessité d'un processus d'étiquetage manuel, dans lequel le rang est défini sur la base d'une addition de la fonction d'entropie et de l'erreur de reconstruction ;

étiqueter (SS6) le signal en utilisant le réseau neuronal (400) pour produire un signal étiqueté si le rang n'indique pas la nécessité du processus d'étiquetage manuel ;

transmettre une demande d'étiquetage à un dispositif d'annotation si le rang indique la nécessité du processus d'étiquetage manuel ; et

former (SS7) le réseau neuronal (400) et le réseau neuronal de décodeur (705) en utilisant le signal étiqueté.

**8.** Support selon la revendication 7, dans lequel la détermination de caractéristiques est réalisée en utilisant un réseau neuronal de codeur (701).

**9.** Support selon la revendication 7, dans lequel l'erreur de reconstruction est définie sur la base d'une distance euclidienne entre le signal et le signal reconstruit.

FIG. 1A

EP 3 545 470 B1

**FIG. 1B**

**S1**

Trained NN trained by the
initial labeled training dataset

**S2**

Score each unlabeled image
using the current model

**S3**

Label the K most important
unlabeled images by the
annotation device

**S4**

Add labeled new training
images into the current labeled
training set

Current trained model

**S5**

Refine or retrain the neural
network by using the new
labeled training set

| Signal |

determining features of
a signal
SS1

features

SS2

determining an
uncertainty measure of the
features

Decoder NN

SS3

uncertainty
measure

reconstructing signal
from the features

reconstructed
signal

SS4

comparing reconstructed
signal with the signal

SS5

reconstruction
error

combining uncertainty
measure with
reconstruction error

SS6

labeling the signal
according to the ranking
score

SS7

Training neural
networks

**FIG. 1C**

Active learning

| Signal (Image) | → | CNN | → | features | → | Uncertainty measure | ❓ | → | Human labeling |

20

CNN training

| Signal (Image) | → | CNN | → | features | → | CNN decoder | → | Signal (Image) |

Reconstruction error

**FIG. 1D**

FIG. 1E

FIG. 2

FIG. 3

**FIG. 4**

FIG. 5

695 — Electronic Text/ Imaging Documents

690 — Network

600

613 — Annotation Device

612 — Pointing Device/Medium

611 — Keyboard

610 — HMI

650 — NIC

660 — Display Interface

665 — Display Device

620 — Processor

630 — Storage

631 — Original Images

632 — Filter System

400 — Neural Networks

670 — Imaging Interface

675 — Imaging Device

680 — Printer Interface

685 — Printing Device

640 — Memory

**FIG. 6**

EP 3 545 470 B1

| Dataset | Uncertain.meas. & Recon. | RDM | EMC | UNC | DW | FF |
|---|---|---|---|---|---|---|
| MNIST | 98.87% | 96.12% | 98.77% | 98.26% | 98.74% | 96.51% |
| CIFAR10 | 56.27% | 52.92% | 53.30% | 53.87% | 54.08% | 51.98% |

**FIG. 7**

EP 3 545 470 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **JIMING LI**. Active learning for hyperspectral image classification with a stacked auto-encoders based neural network. IEEE, 02 June 2015

- **XU JIN et al.** *active dictionary learning in spars representation based classification*, 27 September 2014